(19) **Europäisches Patentamt**
**European Patent Office**
**Office européen des brevets**

(11) **EP 3 051 913 A1**

(12) **EUROPEAN PATENT APPLICATION**
published in accordance with Art. 153(4) EPC

(43) Date of publication:
**03.08.2016 Bulletin 2016/31**

(21) Application number: **14791531.8**

(22) Date of filing: **20.05.2014**

(51) Int Cl.:
***H04W 74/08*** (2009.01)

(86) International application number:
**PCT/CN2014/077916**

(87) International publication number:
**WO 2014/177092 (06.11.2014 Gazette 2014/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.09.2013 CN 201310452557**

(71) Applicant: **ZTE Corporation**
**Shenzhen, Guangdong 518057 (CN)**

(72) Inventors:
- **LIU, Kun**
  **Shenzhen**
  **Guangdong 518057 (CN)**
- **DAI, Bo**
  **Shenzhen**
  **Guangdong 518057 (CN)**

- **LU, Zhaohua**
  **Shenzhen**
  **Guangdong 518057 (CN)**
- **XIA, Shuqiang**
  **Shenzhen**
  **Guangdong 518057 (CN)**
- **FANG, Huiying**
  **Shenzhen**
  **Guangdong 518057 (CN)**
- **SHI, Jing**
  **Shenzhen**
  **Guangdong 518057 (CN)**
- **LI, Xincai**
  **Shenzhen**
  **Guangdong 518057 (CN)**

(74) Representative: **Brevalex**
**95, rue d'Amsterdam**
**75378 Paris Cedex 8 (FR)**

(54) **RANDOM ACCESS RESPONSE MESSAGE PROCESSING METHOD, FIRST NODE**

(57)    A method for processing a random access response message, a first node and a computer storage medium are provided. The method includes the following steps that: the first node transmits a random access response message through a downlink channel; the random access response message carries random access response information aiming at a second node.

Fig. 1

a first node transmits a random access response
message through a downlink channel — 101

**Description**

**TECHNICAL FIELD**

The present disclosure relates to a communication technology, and in particular to a method for processing a random access response message, a first node and a computer storage medium.

**BACKGROUND**

A Machine Type Communication (MTC) User Equipment (UE) is also called a Machine to Machine (M2M) equipment, which is a main application form of the Internet of things at the present stage; the M2M equipment deployed in the market at present is mainly based on a Global System of Mobile communication (GSM). With the improvement of the spectral efficiency of Long Term Evolution (LTE)/Long Term Evolution-Advanced (LTE-A) in recent years, more and more mobile operators select LTE-LTE-A as an evolution direction of a broadband wireless communication system in the future. LTE-LTE-A based-M2M data services having multiple types will become more attractive; however, only when the cost of the LTE-M2M equipment is lower than that of the MTC UE of the GSM system, the M2M services can be really forwarded from the GSM system to an LTE system.

At the present, main alternative methods for reducing the cost of the MTC UE are to: reduce the number of receiving antennas of a terminal, reduce the processing bandwidth of a base band of a terminal, reduce the peak rate supported by a terminal, adopt a half-duplex mode and the like. However, the reduction of the cost is the reduction of the performance; for an LTE/LTE-A system, the demand for cell coverage cannot be reduced, so that when the MTC UE with low cost configuration is adopted, certain measures should be taken to meet a requirement on the coverage performance of an existing LTE terminal. In addition, the MTC UE is probably located at such a position as a basement and a corner of the wall; to make up for the coverage reduction caused by penetration loss, part of the MTC UE need greater performance improvement, therefore, in this scene, it is necessary to improve uplink and downlink coverage of part of the MTC UE. It is needed to think first how to guarantee the access quality of a user; it is necessary to carry out an enhancement design for a Physical Random Access Channel (PRACH) of the LTE/LTE-A, to ensure that the MTC UE may normally access a system.

In the LTE/LTE-A system, UE needs to decode a Physical Broadcast Channel (PBCH) to acquire information carried in a Master Information Block (MIB), and then may decode a Physical Downlink Shared Channel (PDSCH) to acquire information carried in a System Information Block (SIB).

In the LTE/LTE-A system, information of a Physical Resource Block (PRB) occupied by a Random Access Response (RAR) message is included in Downlink Control Information (DCI), and transmitted by a Physical Downlink Control Channel (PDCCH) or an Enhanced Physical Downlink Control Channel (EPDCCH). Furthermore, the DCI information further includes a Cyclic Redundancy Check (CRC) having 16 bits, and the CRD adopts a Random Access Radio Network Temporary Identity (RA-RNTI) having 16 bits to perform scrambling; a scrambling mode is:

$$c_k=(b_k+a_k)\bmod 2 \ k=0, 1, ..., 15;$$

where, $b_k$ is the (k+1)th bit in the CRC; $a_k$ is the (k+1)th bit in the RA-RNTI; $c_k$ is the (k+1)th bit generated by scrambling.

As the PRACH of the LTE/LTE-A system is subject to an enhanced design, the RAR of the LTE/LTE-A system is also needed to be subject to an enhanced design, to ensure that the MTC UE can normally receive a RAR. However, no corresponding technology provides support at present.

SUMMARY

The embodiments of the present disclosure provide a method for processing a random response message, a first node and a computer storage medium, to improve the random access performance of Machine Type Communication (MTC) User Equipment (UE).

The technical solutions of the present disclosure are implemented as follows.

A method for processing a random access response message is provided, including:

a first node transmits a random access response message through a downlink channel, wherein the random access response message carries random access response information aiming at a second node.

Here, the second node at which the random access response information, which is carried in a same random access response message transmitted by the first node, aims is of the same type or multiple types.

Here, the second node may be classified according to at least one of following classification rules:

classifying the second node into one or multiple types according to different coverage improvement levels needed to be supported by the second node;

classifying the second node into one or multiple types according to different numbers of repeated transmission times of a random access sequence, which are needed to be supported by the second node;

classifying the second node into one or multiple types according to different numbers of repeated use times of a Physical Broadcast Channel (PBCH) when the second node successfully decodes the PBCH;

classifying the second node into one or multiple types according to different numbers of repeat times of a Master Information Block (MIB) when the second node successfully decodes the MIB;

classifying the second node into one or multiple types according to different numbers of repeat times of a System Information Block (SIB) when the second node successfully decodes the SIB; and

classifying the second node into one or multiple types according to different numbers of repeat times of the MIB when the second node successfully decodes the PBCH.

Here, the coverage improvement level may include an uplink coverage improvement level and/or a downlink coverage improvement level.

Here, the method further includes:

a system configures configuration information of a transmitting mode of the random access response message; or, the first node transmits configuration information of a transmitting mode of the random access response message in the SIB or Downlink Control Information (DCI).

Here, the method may further include:

the system configures position information of the random access response message; or, the first node transmits position information of the random access response message in the SIB or the DCI.

Here, there may be one piece of or there are multiple pieces of position information of the random access response message.

Here, the second node at which the random access response information, which is carried in the same random access response message transmitted from a resource position indicated by each piece of position information, aims may include at least one of following second nodes:

second nodes of a same type;

second nodes at a same coverage improvement level;

second nodes with a same number of repeated transmission times of a random access sequence;

second nodes with a same Random Access Radio Network Temporary Identity (RA-RNTI);

one or multiple types of second nodes configured by the system;

second nodes which are configured by the system and support different coverage improvement levels; and

second nodes which are configured by the system and support different numbers of repeated transmission times of the random access sequence.

Here, each piece of position information of the random access response message may include at least one piece of following information:

initial position information of the random access response message;

the amount of a subframe occupied by the random access response message;

information of a frequency-domain subcarrier occupied by the random access response message; and

Information of a Physical Resource Block (PRB) occupied by the random access response message.

Here, the initial position information of the random access response message may include at least one piece of following information:

information of a subframe where an initial resource is located;

information of a frame where the initial resource is located;

Information of a PRB where the initial resource is located;

information of a subcarrier where the initial resource is located; and
information about the amount of a subframe between the initial resource and random access signalling transmitted by the second node.

Here, the method may further include:

the system configures information about the number of repeated transmission times of the random access response message; or, the first node transmits information about the number of repeated transmission times of the random access response message in the SIB or the DCI.

Here, there may be one piece of there are multiple pieces of information about the number of repeated transmission times of the random access response message.

Here, the second node at which the random access response information, which is carried in the random access response message transmitted according to each piece of the information about the number of repeated transmission times, aims may include at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the method may further include:

the system configures position information of a detection time window of the random access response message; or, the first node transmits position information of a detection time window of the random access response message in the SI or the DCI.

Here, there may be one piece of or there are multiple pieces of position information of the detection time window of the random access response message.

Here, the second node with a same piece of position information of the detection time window may include at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the position information of the detection time window may include at least one piece of following information:

information about a detection mode ;
information about an initial position of the detection time window;
information about a length of the detection time window;
information about the amount of a subframe between the initial position of the detection time window and random access signalling transmitted by the second node.

Here, the random access response information may include at least one piece of following information:

type information of the second node;
information about a coverage improvement level of the second node;

information about the number of repeated transmission times of a random access sequence of the second node;

information about the number of repeated transmission times of a Physical Uplink Control Channel (PUCCH) of the second node;

information about the number of repeated transmission times of a Physical Uplink Shared Channel (PUSCH) of the second node;

information about the number of repeated transmission times of a Radio Resource Control (RRC) Connection Request (CR) message transmitted by the second node;

adjustment information of the coverage improvement level of the second node;

adjustment information of the number of repeated transmission times of the random access sequence of the second node;

adjustment information of the number of repeated transmission times of the PUCCH of the second node;

adjustment information of the number of repeated transmission times of the PUSCH of the second node; and

adjustment information of the number of repeated transmission times of the RRC connection request of the second node.

Here, the RRC connection request message may include at least one piece of following information:

the type information of the second node;

the information about a coverage improvement level of the second node;

the information about the number of repeated transmission times of the random access sequence of the second node;

information about the number of repeated transmission times of a Physical Downlink Control Channel (PDCCH) of the second node;

information about the number of repeated transmission times of an Enhanced Physical Downlink Control Channel (EPDCCH) of the second node;

information about the number of repeated transmission times of a Physical Downlink Shared Channel (PDSCH) of the second node;

information about the number of repeated transmission times of a conflict resolution message transmitted by the first node;

the adjustment information of the coverage improvement level of the second node;

the adjustment information of the number of repeated transmission times of the random access sequence of the second node;

adjustment information of the number of repeated transmission times of the PUCCH of the second node;

adjustment information of the number of repeated transmission times of the EPUCCH of the second node;

adjustment information of the number of repeated transmission times of the PDSCH of the second node; and

adjustment information of the number of repeated transmission times of the conflict resolution message transmitted by the first node.

Here, the configuration by the system may include: configuration by a standard, configuration by a network or configuration by a network high-level.

Here, before the step that the first node transmits a random access response message through a downlink channel, the method may further include: the second node transmits random access signalling through an uplink channel.

Here, a resource of the random access signalling may be transmitted by way of frequency hopping.

Here, a granularity of the frequency hopping may be determined according to at least one piece of following information:

an uplink channel bandwidth supported by the first node;

an uplink channel bandwidth supported by the second node;

a coverage improvement level of the second node; and

information about the number of repeated transmission times of a random access sequence of the second node.

Here, the number of repeat times of the random access signalling transmitted by the second node may be indicated by at least one piece of following information:

a coverage improvement level of the second node;

a granularity of the frequency hopping;

a highest coverage improvement level in the coverage improvement levels configured by the first node; and

a coverage improvement level pre-defined in the coverage improvement levels configured by the first node.

Here, the coverage improvement level of the second node may be determined by the second node itself, and transmitted by the first node through the random access response message, or transmitted by the first node through high-level signalling.

Here, the first node may include at least one of followings: a Macro cell, a Micro cell, a Pico cell, a Femto cell, a home cell, a Low Power Node (LPN), and a Relay Station; and the second node may include one or more terminals or may be a terminal group.

A first node is further provided, including:

a message generation unit configured to generate a random access response message, wherein the random access response message carries random access response information aiming at a second node; and
a communication unit configured to transmit the random access response message generated by the message generation unit through a downlink channel.

The first node may further include:

a classification unit configured to classify the second node at which the random access response information, which is carried in a same random access response message transmitted by the communication unit, aims into a same type or multiple types.

Here, the classification unit may be further configured to classify the second node according to at least one of following rules:

classifying the second node into one or multiple types according to different coverage improvement levels needed to be supported by the second node;
classifying the second node into one or multiple types according to different numbers of repeated transmission times of a random access sequence, which are needed to be supported by the second node;
classifying the second node into one or multiple types according to different numbers of repeated use times of a Physical Broadcast Channel (PBCH) when the second node successfully decodes the PBCH;
classifying the second node into one or multiple types according to different numbers of repeat times of a Master Information Block (MIB) when the second node successfully decodes the MIB;
classifying the second node into one or multiple types according to different numbers of repeat times of a System Information Block (SIB) when the second node successfully decodes the SIB; and
classifying the second node into one or multiple types according to different numbers of repeat times of the MIB when the second node successfully decodes the PBCH.

There may be one coverage improvement level or there are multiple coverage improvement levels; the coverage improvement level needed to be supported by the second node may be configured by a system, or configured by the classification unit in the SIB or DCI; correspondingly, the classification unit may be further configured to configure the coverage improvement level needed to be supported by the second node in the SIB or the DCI.

Here, the coverage improvement level may include an uplink coverage improvement level and/or a downlink coverage improvement level.

Here, the communication unit may be further configured to:

transmit configuration information of a transmitting mode of the random access response message in the SIB or the DCI.

Here, there may be one piece of or there are multiple pieces of position information of the random access response message.

Here, the second node at which the random access response information, which is carried in the same random access response message transmitted from a resource position indicated by each piece of position information, aims may include at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and

second nodes which are configured by the system and support different numbers of repeated transmission times of the random access sequence.

Here, each piece of position information of the random access response message may include at least one piece of following information:

initial position information of the random access response message;
the amount of a subframe occupied by the random access response message;
information of a frequency-domain subcarrier occupied by the random access response message; and
Information of a PRB occupied by the random access response message.

Here, the initial position information of the random access response message may include at least one piece of following information:

information of a subframe where an initial resource is located;
information of a frame where the initial resource is located;
Information of a PRB where the initial resource is located;
information of a subcarrier where the initial resource is located; and
information about the amount of a subframe between the initial resource and random access signalling transmitted by the second node.

Here, the communication unit may be further configured to:

transmit information about the number of repeated transmission times of the random access response message in the SIB or the DCI.

Here, there may be one piece of there are multiple pieces of information about the number of repeated transmission times of the random access response message.
Here, the second node at which the random access response information, which is carried in the random access response message transmitted according to each piece of the information about the number of repeated transmission times, aims may include at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the communication unit may be further configured to:

transmit position information of a detection time window of the random access response message in the SI or the DCI.

Here, there may be one piece of or there are multiple pieces of position information of the detection time window of the random access response message.
Here, the second node configured with a same piece of position information of the detection time window may include at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the position information of the detection time window may include at least one piece of following information:

information about a detection mode ;
information about an initial position of the detection time window;
information about a length of the detection time window;
information about the amount of a subframe between the initial position of the detection time window and random access signalling transmitted by the second node.

Here, the random access response information may include at least one piece of following information:

type information of the second node;
information about a coverage improvement level of the second node;
information about the number of repeated transmission times of the random access sequence of the second node;
information about the number of repeated transmission times of a Physical Uplink Control Channel (PUCCH) of the second node;
information about the number of repeated transmission times of a Physical Uplink Shared Channel (PUSCH) of the second node;
information about the number of repeated transmission times of a Radio Resource Control (RRC) Connection Request (CR) message transmitted by the second node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the PUSCH of the second node; and
adjustment information of the number of repeated transmission times of the RRC connection request of the second node.

Here, the RRC connection request message may include at least one piece of following information:

the type information of the second node;
the information about a coverage improvement level of the second node;
the information about the number of repeated transmission times of the random access sequence of the second node;
information about the number of repeated transmission times of a Physical Downlink Control Channel (PDCCH) of the second node;
information about the number of repeated transmission times of an Enhanced Physical Downlink Control Channel (EPDCCH) of the second node;
information about the number of repeated transmission times of a Physical Downlink Shared Channel (PDSCH) of the second node;
information about the number of repeated transmission times of a conflict resolution message transmitted by the first node;
the adjustment information of the coverage improvement level of the second node;
the adjustment information of the number of repeated transmission times of the random access sequence of the second node;
adjustment information of the number of repeated transmission times of the PUCCH of the second node;
adjustment information of the number of repeated transmission times of the EPUCCH of the second node;
adjustment information of the number of repeated transmission times of the PDSCH of the second node; and
adjustment information of the number of repeated transmission times of the conflict resolution message transmitted by the first node.

Here, the configuration by the system may include: configuration by a standard, configuration by a network or configuration by a network high-level.

Here, the communication unit may be further configured to, before transmitting the random access response message through the downlink channel, receive random access signalling transmitted by the second node through an uplink channel.

Here, a resource of the random access signalling may be transmitted by way of frequency hopping.

Here, a granularity of the frequency hopping may be determined according to at least one piece of following information:

an uplink channel bandwidth supported by the first node;
an uplink channel bandwidth supported by the second node;
a coverage improvement level of the second node; and
information about the number of repeated transmission times of a random access sequence of the second node.

Here, the number of repeat times of the random access signalling transmitted by the second node may be indicated by at least one piece of following information:

a coverage improvement level of the second node;
a granularity of the frequency hopping;
a highest coverage improvement level in the coverage improvement levels configured by the first node; and
a coverage improvement level pre-defined in the coverage improvement levels configured by the first node.

Here, the coverage improvement level of the second node may be determined by the second node itself, or transmitted by the communication unit through the random access response message or through high-level signalling.
Correspondingly, the communication unit may be further configured to transmit the coverage improvement level of the second node through the random access response message or the high-level signalling.
Here, the first node may include at least one of followings: a Macro cell, a Micro cell, a Pico cell, a Femto cell, a home cell, a Low Power Node (LPN), and a Relay Station;
the second node may include one or more terminals or may be a terminal group.
A computer storage medium is further provided, having stored therein computer executable instructions configured to execute the above method for processing a random access response message.
The technology for processing a random access response message, which is provided by the embodiments of the present disclosure, may improve the random access performance of MTC UE, and meanwhile, reduce the probability of random access collision and lower the access delay.

## BRIEF DESCRIPTION OF THE DRAWINGS

Fig. 1 is a flowchart of a method for processing a random access response message according to an embodiment of the present disclosure;
Fig. 2 is a structural diagram of a first node according to an embodiment of the present disclosure;
Fig. 3 is a structural diagram of a preamble format 0 of the specific embodiments 1 to 9 of the present disclosure;
Fig. 4 is a structural diagram of random access signalling of the specific embodiments 1 to 6 of the present disclosure;
Fig. 5 is a diagram of a resource position distribution of an RAR message of respective Coverage Improvement Levels (CILs) in the specific embodiments 1 and 2 of the present disclosure;
Fig. 6 is a diagram of transmission of random access signalling and a random access response message in the specific embodiments 1 and 3 of the present disclosure;
Fig. 7 is a diagram of transmission of random access signalling and a random access response message in the specific embodiments 2, 7 and 8 of the present disclosure;
Fig. 8 is a diagram of transmission of random access signalling and a random access response message in the specific embodiment 4 of the present disclosure;
Fig. 9 is a diagram of transmission of random access signalling and a random access response message in the specific embodiment 5 of the present disclosure;
Fig. 10 is a diagram of transmission of random access signalling and a random access response message in the specific embodiment 6 of the present disclosure;
Fig. 11 is a structural diagram of random access signalling according to the specific embodiments 7, 8 and 9;
Fig. 12 is a diagram of transmission of random access signalling and a random access response message in the specific embodiment 8 of the present disclosure; and
Fig. 13 is a diagram of transmission of random access signalling and a random access response message in the specific embodiment 9 of the present disclosure.

## DETAILED DESCRIPTION

The present disclosure is further described below with reference to the drawings and the specific embodiments in detail. It should be noted that the characteristics in the embodiments of the present disclosure may be combined under the condition of no conflicts.

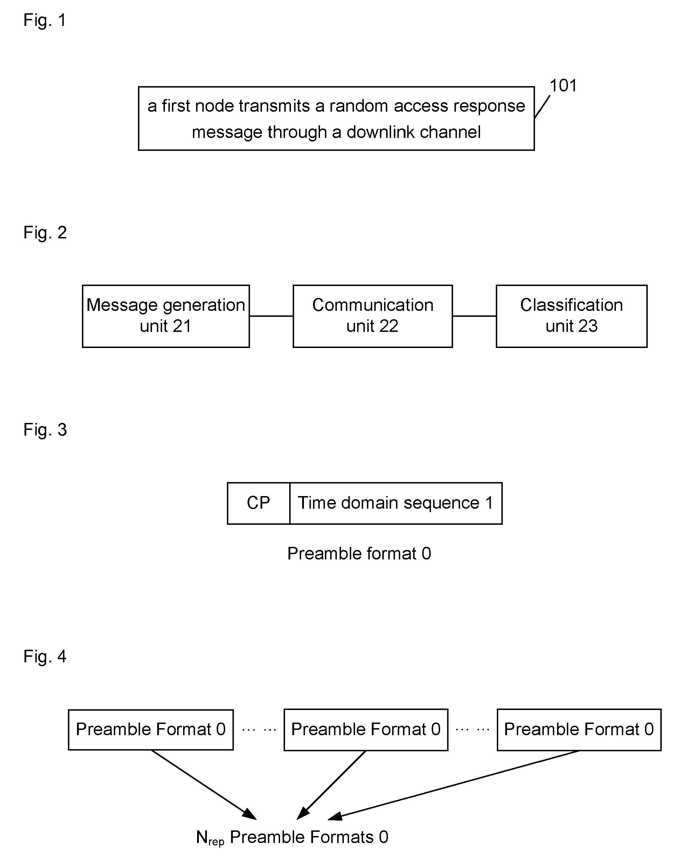

An embodiment of the present disclosure provides a method for processing a random access response message, as shown in Fig. 1, which includes:

step 101: a first node transmits a random access response message through a downlink channel, wherein the random access response message carries random access response information aiming at a second node.

Here, the second node at which the random access response information, which is carried in the same random access response message transmitted by the first node, aims is of the same type or multiple types.

Here, the types of the second node are classified according to at least one of the following classification rules:

the second node is classified into one or multiple types according to different coverage improvement levels needed to be supported by the second node;
the second node is classified into one or multiple types according to different numbers of repeated transmission times of a random access sequence, which are needed to be supported by the second node;
the second node is classified into one or multiple types according to different numbers of repeated use times of Physical Broadcast Channels (PBCH) when the second node successfully decodes the PBCH;
the second node is classified into one or multiple types according to different numbers of repeat times of a Master Information Block (MIB) when the second node successfully decodes the main MIB;
the second node is classified into one or multiple types according to different numbers of repeat times of a System Information Block (SIB) when the second node successfully decodes the SIB; and
the second node is classified into one or multiple types according to different numbers of repeat times of the MIB when the second node successfully decodes the PBCH.

It should be noted that the classification of the second node into one or multiple types may be also regarded as classification of the second node into one or multiple sets; in addition, in actual application, the second node in a set may be changed.

Here, the coverage improvement levels include an uplink coverage improvement level and/or a downlink coverage improvement level.

Here, the method further includes:

a system configures configuration information of a transmitting mode of the random access response message; or, the first node transmits the configuration information of a transmitting mode of the random access response message in the SIB or Downlink Control Information (DCI).

Here, the method further includes:

the system configures position information of the random access response message; or, the first node transmits the position information of the random access response message in the SIB or the DCI.

Here, there is one piece of or there are multiple pieces of position information of the random access response message.

Here, the second node at which the random access response information, which is carried in the same random access response message transmitted from a resource position indicated by each piece of position information, aims includes at least one of the following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, each piece of position information of the random access response message includes at least one piece of following information:

initial position information of the random access response message;

the amount of a subframe occupied by the random access response message;

information of a frequency-domain subcarrier occupied by the random access response message; and

Information of a Physical Resource Block (PRB) occupied by the random access response message.

Here, the initial position information of the random access response message includes at least one piece of following information:

information of a subframe where an initial resource is located;

information of a frame where the initial resource is located;

Information of a PRB where the initial resource is located;

information of a subcarrier where the initial resource is located; and

information about the amount of a subframe between the initial resource and random access signalling transmitted by the second node.

Here, the method further includes:

the system configures information about the number of repeated transmission times of the random access response message; or, the first node transmits information about the number of repeated transmission times of the random access response message in the SIB or the DCI.

Here, there is one piece of there are multiple pieces of information about the number of repeated transmission times of the random access response message.

Here, the second node at which the random access response information, which is carried in the random access response message transmitted according to each piece of the information about the number of repeated transmission times, aims includes at least one of the following second nodes:

second nodes of a same type;

second nodes at a same coverage improvement level;

second nodes with a same number of repeated transmission times of a random access sequence;

second nodes with a same Random Access Radio Network Temporary Identity (RA-RNTI);

one or multiple types of second nodes configured by the system;

second nodes which are configured by the system and support different coverage improvement levels; and

second nodes which are configured by the system and support different numbers of repeated transmission times of the random access sequence.

Here, the method further includes:

the system configures position information of a detection time window of the random access response message; or, the first node transmits the position information of the detection time window of the random access response message in the SIB or the DCI.

Here, there is one piece of or there are multiple pieces of position information of the detection time window of the random access response message.

Here, the second node configured with the same piece of position information of the detection time window include at least one of the following second nodes:

second nodes of a same type;

second nodes at a same coverage improvement level;

second nodes with a same number of repeated transmission times of a random access sequence;

second nodes with a same Random Access Radio Network Temporary Identity (RA-RNTI);

one or multiple types of second nodes configured by the system;

second nodes which are configured by the system and support different coverage improvement levels; and

second nodes which are configured by the system and support different numbers of repeated transmission times of the random access sequence.

Here, the position information of the detection time window includes at least one piece of following information:

information about a detection mode ;

information about an initial position of the detection time window;
information about a length of the detection time window; and
information about the amount of a subframe between the information about an initial position of the detection time window and random access signalling transmitted by the second node.

Here, the random access response information includes at least one piece of following information:

type information of the second node;
information about a coverage improvement level of the second node;
information about the number of repeated transmission times of a random access sequence of the second node;
information about the number of repeated transmission times of a Physical Uplink Control Channel (PUCCH) of the second node;
information about the number of repeated transmission times of a Physical Uplink Shared Channel (PUSCH) of the second node;
information about the number of repeated transmission times of a Radio Resource Control (RRC) Connection Request (CR) message transmitted by the second node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the PUSCH of the second node; and
adjustment information of the number of repeated transmission times of the RRC connection request of the second node.

Here, the RRC connection request message includes at least one piece of following information:

type information of the second node;
information about a coverage improvement level of the second node;
information about the number of repeated transmission times of the random access sequence of the second node;
information about the number of repeated transmission times of a Physical Downlink Control Channel (PDCCH) of the second node;
information about the number of repeated transmission times of an Enhanced Physical Downlink Control Channel (EPDCCH) of the second node;
information about the number of repeated transmission times of a Physical Downlink Shared Channel (PDSCH) of the second node;
information about the number of repeated transmission times of a conflict resolution message transmitted by the first node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the EPUCCH of the second node;
adjustment information of the number of repeated transmission times of the PDSCH of the second node; and
adjustment information of the number of repeated transmission times of the conflict resolution message transmitted by the first node.

Here, the configuration by the system includes: configuration by a standard, configuration by a network or configuration by a network high-level.
Here, before the step that the first node transmits a random access response message through a downlink channel, the method further includes: the second node transmits random access signalling through an uplink channel.
Here, a resource of the random access signalling is transmitted by way of frequency hopping.
Here the granularity of the frequency hopping is determined according to at least one piece of following information:

an uplink channel bandwidth supported by the first node;
an uplink channel bandwidth supported by the second node;
a coverage improvement level of the second node; and
information about the number of repeated transmission times of the random access sequence of the second node.

Here, the number of repeat times of the random access signalling transmitted by the second node is indicated by at least one piece of following information:

the coverage improvement level of the second node;
the granularity of the frequency hopping;
the highest coverage improvement level in the coverage improvement levels configured by the first node; and
the coverage improvement level pre-defined in the coverage improvement levels configured by the first node.

Here, the coverage improvement level of the second node is determined by the second node itself, or transmitted by the first node through the random access response message, or transmitted by the first node through the high-level signalling.

Here, the first node includes at least one of the followings: a Macro cell, a Micro cell, a Pico cell, a Femto cell, a home cell, a Low Power Node (LPN), and a Relay Station;

the second node includes one or more terminals or is a terminal group.

An embodiment of the present disclosure further provides a computer storage medium, having stored therein computer executable instructions configured to execute the method for processing a random access response message as shown in Fig. 1.

An embodiment further provides a first node, as shown in Fig. 2, including:

a message generation unit 21 configured to generate a random access response message, wherein the random access response message carries random access response information aiming at a second node; and
a communication unit 22 configured to transmit the random access response message generated by the message generation unit through a downlink channel.

The first node further includes:

a classification unit 23 configured to classify the second node at which the random access response information, which is carried in the same random access response message transmitted by the communication unit 22, aims into the same type or multiple types.

Here, the classification unit 23 is further configured to classify the second node according to at least one of the following rules:

the second node is classified into one or multiple types according to different coverage improvement levels needed to be supported by the second node;
the second node is classified into one or multiple types according to different numbers of repeated transmission times of a random access sequence, which are needed to be supported by the second node;
the second node is classified into one or multiple types according to different numbers of repeated use times of PBCH when the second node successfully decodes the PBCH;
the second node is classified into one or multiple types according to different numbers of repeat times of an MIB when the second node successfully decodes the main MIB;
the second node is classified into one or multiple types according to different numbers of repeat times of an SIB when the second node successfully decodes the SIB; and
the second node is classified into one or multiple types according to different numbers of repeat times of the MIB when the second node successfully decodes the PBCH.

There is one coverage improvement level or there are multiple coverage improvement levels; the coverage improvement level needed to be supported by the second node is configured by a system, or configured by the classification unit 23 in the SIB or DCI; correspondingly, the classification unit 23 is further configured to configure the coverage improvement level needed to be supported by the second node in the SIB or the DCI.

Here, the coverage improvement levels include an uplink coverage improvement level and/or a downlink coverage improvement level.

Here, the communication unit 22 is further configured to:

transmit configuration information of a transmitting mode of the random access response message in the SI or the DCI.

Here, there is one piece of or there are multiple pieces of position information of the random access response message.

Here, the second node at which the random access response information, which is carried in the same random access response message transmitted from a resource position indicated by each piece of position information, aims includes at least one of the following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, each piece of position information of the random access response message includes at least one piece of following information:

initial position information of the random access response message;
the amount of a subframe occupied by the random access response message;
information of a frequency-domain subcarrier occupied by the random access response message; and
Information of a PRB occupied by the random access response message.

Here, the initial position information of the random access response message includes at least one piece of following information:

information of a subframe where an initial resource is located;
information of a frame where the initial resource is located;
Information of a PRB where the initial resource is located;
information of a subcarrier where the initial resource is located; and
information about the amount of a subframe between the initial resource and random access signalling transmitted by the second node.

Here, the communication unit 22 is further configured to:

transmit information about the number of repeated transmission times of the random access response message in the SI or the DCI.

Here, there is one piece of there are multiple pieces of information about the number of repeated transmission times of the random access response message.
Here, the second node at which the random access response information, which is carried in the random access response message transmitted according to each piece of the information about the number of repeated transmission times, aims includes at least one of the following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the communication unit 22 is further configured to:

transmit the position information of a detection time window of the random access response message in the SI or the DCI.

Here, there is one piece of or there are multiple pieces of position information of the detection time window of the random access response message.

Here, the second node configured with the same piece of position information of the detection time window includes at least one of the following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

Here, the position information of the detection time window includes at least one piece of following information:

information about a detection mode ;
information about an initial position of the detection time window;
information about a length of the detection time window; and
information about the amount of a subframe between the initial position of the detection time window and random access signalling transmitted by the second node.

Here, the random access response information includes at least one piece of following information:

type information of the second node;
information about a coverage improvement level of the second node;
information about the number of repeated transmission times of the random access sequence of the second node;
information about the number of repeated transmission times of a Physical Uplink Control Channel (PUCCH) of the second node;
information about the number of repeated transmission times of a Physical Uplink Shared Channel (PUSCH) of the second node;
information about the number of repeated transmission times of a Radio Resource Control (RRC) Connection Request (CR) message transmitted by the second node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the PUSCH of the second node; and
adjustment information of the number of repeated transmission times of the RRC connection request of the second node.

Here, the RRC connection request message includes at least one piece of following information:

type information of the second node;
information about a coverage improvement level of the second node;
information about the number of repeated transmission times of the random access sequence of the second node;
information about the number of repeated transmission times of a PDCCH of the second node;
information about the number of repeated transmission times of an EPDCCH of the second node;
information about the number of repeated transmission times of a PDSCH of the second node;
information about the number of repeated transmission times of a conflict resolution message transmitted by the first node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the EPUCCH of the second node;
adjustment information of the number of repeated transmission times of the PDSCH of the second node;
adjustment information of the number of repeated transmission times of the conflict resolution message transmitted by the first node.

Here, the configuration by the system includes: configuration by a standard, configuration by a network or configuration by a network high-level.

Here, the communication unit 22 is further configured to, before transmitting the random access response message through the downlink channel, receive random access signalling transmitted by the second node through an uplink channel.

Here, a resource of the random access signalling is transmitted by way of frequency hopping.

Here the granularity of the frequency hopping is determined according to at least one piece of following information:

an uplink channel bandwidth supported by the first node;
an uplink channel bandwidth supported by the second node;
a coverage improvement level of the second node; and
information about the number of repeated transmission times of the random access sequence of the second node.

Here, the number of repeat times of the random access signalling transmitted by the second node is indicated by at least one piece of following information:

the coverage improvement level of the second node;
the granularity of the frequency hopping;
the highest coverage improvement level in the coverage improvement levels configured by the first node; and
the coverage improvement level pre-defined in the coverage improvement levels configured by the first node.

Here, the coverage improvement level of the second node is determined by the second node itself, or transmitted by the communication unit 22 through the random access response message, or through high-level signalling.

Correspondingly, the communication unit 22 is further configured to transmit the coverage improvement level of the second node through the random access response message or the high-level signalling.

In practical application, the first node may include at least one of the followings: a Macro cell, a Micro cell, a Pico cell, a Femto cell, a home cell, a Low Power Node (LPN), and a Relay Station; the second node may include one or more terminals or may be a terminal group.

The message generation unit 21 and the classification unit 23 may be implemented by a Central Processing unit (CPU), a Digital Signal Processor (DSP) or a Field Programmable Gate Array (FPGA); the communication unit 22 may be implemented by a transmitter and a receiver in the first node.

The present disclosure is described below with reference to the specific embodiments.

Specific embodiment 1:

In this embodiment, a first node is an evolved NodeB (eNB), and a second node is a Machine Type Communication User Equipment (MTC UE).

In the LTE system, there are eNB and MTC UEs, and the MTC UEs are classified into a Normal MTC UE and a Coverage Improvement (CI) MCT UE; a time division multiplexing mode and/or a frequency division multiplexing mode and/or a code division multiplexing mode may be adopted to allocate PRACH resources to the Normal MTC UE and the CI MTC UE. In the embodiment, the initially accessed PRACH resources allocated to the Normal MTC UE and the CI MTC UE occupy the same PRB; the two types of MTC UE are distinguished according to different configured Preambles used for random access. For example, there are totally N random access sequences serving as Preambles for random access; a random access sequences are allocated to the CI MTC UE, and N-a random access sequences are allocated to the Normal MTC UE;

in this embodiment, if UE1 is the CI MTC UE, the UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; a time domain Sequence1 (that is T_Sequence1) is a time domain expression form of the Sequence1.

It is configured in the system that the number of repeat times of the Preamble Format 0 transmitted by the CI MTC UE is Nrep, wherein the Nrep is the number of repeat times of the Preamble Format 0 corresponding to the maximum coverage improvement level (for example, Coverage Improvement Level (CIL)=15FbB is the maximum coverage improvement level) configured in the system;

Fig. 4 is a diagram of formation of random access signalling transmitted by the UE1; when the preamble Format 0 is repeatedly transmitted for Nrep times, the UE1 transmits the random access signalling on the PRACH resources allocated by the system.

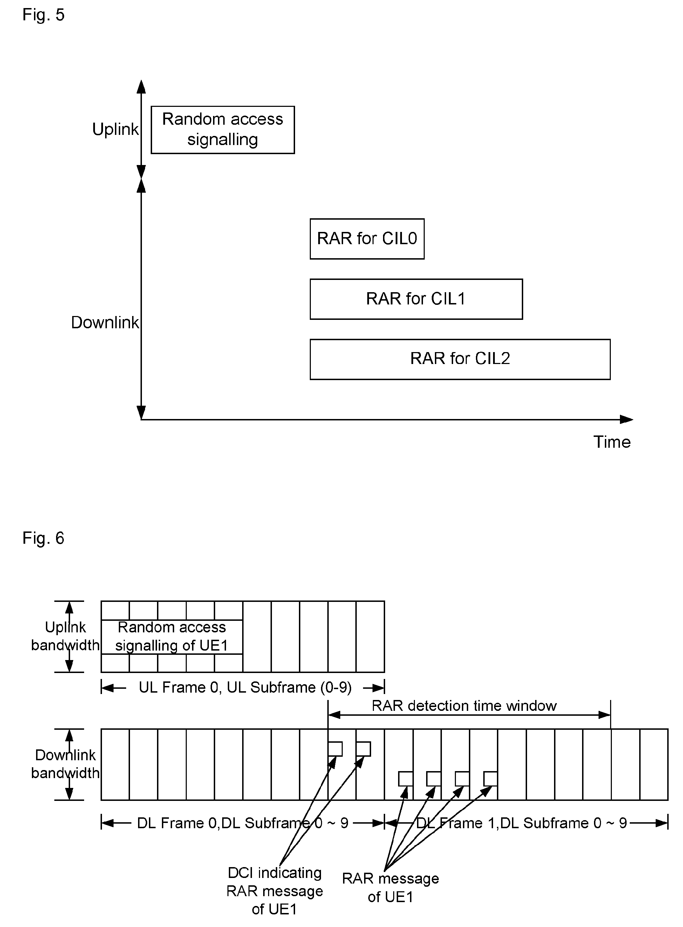

The eNB needs to detect the random access signalling transmitted by the UE1, and is configured with various detection time windows for random access signalling with different lengths; each detection time window corresponds to the number of repeat times (the maximum number is Nrep) of the preamble Format 0; the eNB tries to adopt various detection time windows to detect the random access signalling transmitted by the UE1, and determines the CIL of the UE1 according to the number of repeat times of the preamble Format 0 corresponding to the minimum detection time window of the successfully detected random access signalling transmitted by the UE1. In this embodiment, it is supposed that the eNB is configured to support totally 3 CILs in the SIB, which are CIL0 (corresponding to coverage improvement 5dB), CIL1 (corresponding to coverage improvement 10dB) and CIL2 (corresponding to coverage improvement 15dB); the eNB determines that the CIL of the UE1 is CIL0 according to the principle above;
the eNB determines information about the number of repeated transmission times of a Random Access Response (RAR) message including RAR information of the UE1 according to the CIL0; the RAR messages of different CIL levels occupy different resources during transmission; as shown in Fig. 5, the resource position of the RAR message of each CIL level is indicated by Downlink Control Information (DCI), transmitted through a PDCCH, and scrambled by a RA-RNTI.

In the embodiment, the UE1 transmits random access signalling on UL subframes 0 to 4 of Frame 0, and then detects a PDCCH within an RAR detection time window configured by the system, to determine whether there is DCI that is scrambled by the RA-RNTI being transmitted, as shown in Fig. 6. In this embodiment, an initial subframe of the RAR detection time window is spaced from the random access signalling by 3 subframes, and the RAR detection time window occupies 10 subframes in length, that is, from subframe 8 of Frame 0 to subframe 7 of Frame 1. The system pre-defines that the DCI is repeatedly transmitted twice, and two subframes are occupied; the UE1 detects the DCI scrambled by the RA-RNTI in the PDCCHs of subframe 8 and subframe 9 of Frame 0, to indicate relevant information of the RAR message of the UE1. After successfully decoding the DCI, the UE1 acquires information about the number of repeated transmission times of the RAR message and information about the occupied resource position; for example, the RAR message is transmitted in the subframes 0 to 3 of Frame 1, and repeatedly transmitted for 4 times.

After successfully decoding the RAR message, the UE1 acquires that the CIL value transmitted in the message is CIL0, and defines the CIL to be an Uplink CIL (UL CIL); the UE1 determines information about the number of repeated transmission times of the RRC connection request message according to the UL CIL0.

In addition to the embodiment, information about the number of repeated transmission times of the RRC connection request message may be directly informed via the RAR message.

When decoding the RAR, the UE1 may further determine the adjustment information of a Downlink CIL (DL CIL).

The UE1 transmits the RRC connection request message according to the PUSCH resource indicated in the RAR message and the information about the number of repeat times of the RRC connection request message;
the RRC connection request message carries the adjustment information of the number of repeated transmission times of the RAR message and/or the adjustment information of the DL CIL and/or information about the number of repeat times of a conflict resolution message; the eNB may adjust the number of repeat times of the conflict resolution message based on the information.

Specific embodiment 2:

In the LTE system, there are MTC UEs, and the MTC UEs are classified into Normal a MTC UE and a CI MCT UE; PRACH resources may be allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy different PRBs; the CI MTC UE is configured with a Preambles for random access;
in the system, the number of repeat times of the Preamble transmitted by the CI MTC UE is Nrep;

in this embodiment, if UE1 is the CI MTC UE, then UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; a time domain Sequence1 (that is T_Sequence1) is a time domain expression form of the Sequence1. Fig. 4 is a diagram of formation of random access signalling transmitted by the UE1; when the preamble Format 0 is repeatedly transmitted for Nrep times, the UE1 transmits the random access signalling on the PRACH resources allocated by the system.

The eNB needs to detect the random access signalling transmitted by the UE1, and is configured with various detection time windows for random access signalling with different lengths; each detection time window corresponds to the number of repeat times (the maximum number is Nrep) of the preamble Format 0; the eNB tries to adopt various detection time windows to detect the random access signalling transmitted by the UE1, and determines the CIL of the UE1 according to the number of repeat times of the preamble Format 0 corresponding to the minimum detection time window of the successfully detected random access signalling transmitted by the UE1. In this embodiment, it is supposed that there are totally 3 CILs, which are CIL0 (corresponding to coverage improvement 5dB), CIL1 (corresponding to coverage improvement 10dB) and CIL2 (corresponding to coverage improvement 15dB), the eNB determines that the CIL of the UE1 is CIL0 according to the principle above;

the eNB determines information about the number of repeated transmission times of the RAR message including the RAR information of the UE1 according to the CIL0; the RAR messages of different CIL levels occupy different resources during transmission; as shown in Fig. 5, the resource position of the RAR message of each CIL level is indicated by DCI, transmitted through a PDCCH, and scrambled by a RA-RNTI. The value of the RA-RNTI is at least related to the index of an occupied initial subframe, the index of an occupied frequency resource and a CIL value when the UE transmits the random access signalling.

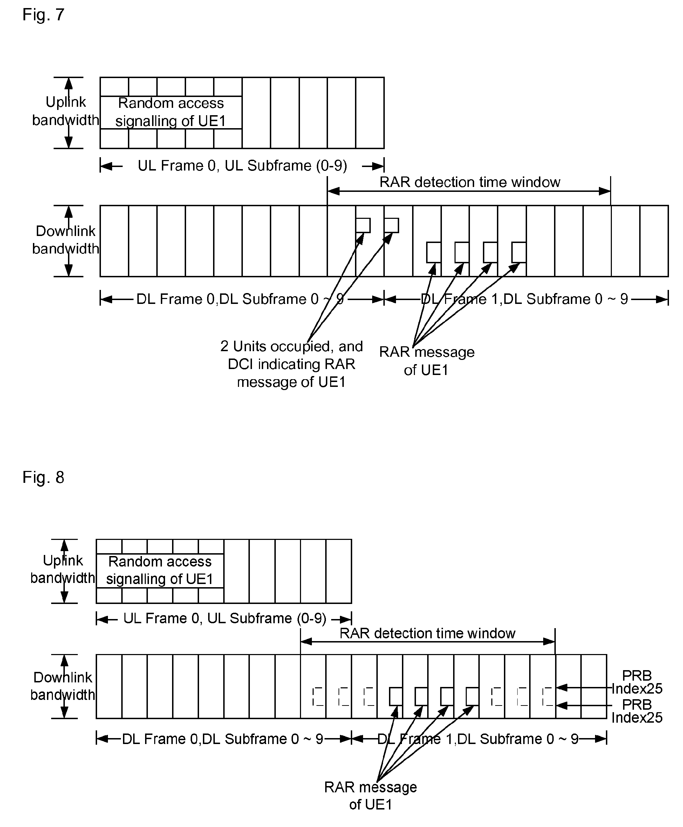

In the embodiment, the UE1 transmits random access signalling on UL subframes 0 to 4 of Frame 0, and then detects a PDCCH within an RAR detection time window configured by the system, to determine whether there is DCI that is scrambled by the RA-RNTI being transmitted, as shown in Fig. 7. In this embodiment, an initial subframe of the RAR detection time window is spaced from the random access signalling by 3 subframes, and the RAR detection time window occupies 10 subframes in length, that is, from subframe 8 of Frame 0 to subframe 7 of Frame 1.

The UE1 detects the DCI scrambled by the RA-RNTI according to a pre-defined principle, and the DCI is configured to indicate the relevant information of the RAR message of the UE1, wherein the pre-defined principle may be as follows:

a subframe set to be detected is determined according to the quantity of occupied subframes and the distribution of the subframes when the DCI scrambled by the RA-RNTI is repeatedly transmitted; each element in the subframe set corresponds to one or more subframes; the position information to be detected of the DCI scrambled by the RA-RNTI is determined at the subframes corresponding to each element according to the size of a resource unit occupied by the DCI, to finally determine whether there is DCI, that is scrambled by the RA-RNTI, being transmitted in the RAR detection time window.

In the embodiment, the repeated transmission of the DCI scrambled by the RA-RNTI occupies 2, 4 and 8 subframes, and occupies continuous subframes; in each subframe, the minimum unit of the resources occupied by the DCI is 1 Unit, which corresponds to Nsc subcarriers *Nsym OFDM signs, and the quantity of Units occupied by the DCI is 1, 2, 4 and 8; the UE1 detects the DCI scrambled by the RA-RNTI according to the pre-defined principle, and detects the DCI scrambled by the RA-RNTI in the PDCCHs of subframe 9 of Frame 0 and subframe 0 of Frame 0, that is, there are 2 subframes, which are repeatedly transmitted by the DCI scrambled by the RA-RNTI, of the UE1, and there is 1 resource Unit occupied by the DCI at each subframe.

After successfully decoding the DCI, the UE1 acquires information about the number of repeated transmission times of the RAR message and information about occupied resource position; for example, the RAR message is transmitted in the subframes 1 to 4 of Frame 1, and repeatedly transmitted for 4 times.

After successfully decoding the RAR message, the UE1 acquires that the CIL value is CIL0, and defines the CIL to be a UL CIL; the UE1 determines information about the number of repeated transmission times of the RRC connection request message according to the UL CIL0.

Furthermore, information about the number of repeated transmission times of the RRC connection request message may be directly informed to the UE1 via the RAR message.

The UE1 transmits the RRC connection request message according to the PUSCH resources indicated in the RAR message and information about the number of repeat times of the RRC connection request message;

the eNB may adjust information about the number of repeat times of a conflict resolution message based on the adjustment information of the repeated transmission times of the RAR message;

the UE1 may further determine a DL CIL value according to the position information (there are 2 occupied subframes, and there is 1 resource Unit occupied by the DCI at each subframe) of the DCI scrambled by the RA-RNTI; for example, if the DL CIL value is 0, the RRC connection request message may carry the DL CIL value, and the eNB may adjust information about the number of repeat times of the conflict resolution message and/or information about the number of repeat times of the DCI configured to indicate the conflict resolution message according to this information.

Specific embodiment 3:

In the LTE system, there are MTC UEs, and the MTC UEs are classified into a Normal MTC UE and a CI MCT UE; PRACH resources may be allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy different PRBs; the two types of MTC UE are distinguished according to different configured Preambles for random access. For example, there are totally N random access sequences serving as Preambles for random access; a random access sequences are allocated to the CI MTC UE, and N-a random access sequences are allocated to the Normal MTC UE;

in the system, the number of repeat times of the Preamble transmitted by the CI MTC UE is Nrep;

in this embodiment, if UE1 is the CI MTC UE, then UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; a time domain Sequence1 (that is T_Sequence1) is a time domain expression form of the Sequence1. Fig. 4 is a diagram of formation of random access signalling transmitted by the UE1; when the preamble Format 0 is repeatedly transmitted for Nrep times, the UE1 transmits the random access signalling on the PRACH resources allocated by the system.

The number of repeated transmission times of the RAR message configured in the system is NRARrep, NRARrep=4 in this embodiment;

the eNB configures that the number of repeated transmission times of the RAR message including the RAR information of the UE1 is NRARrep; the resource position of the RAR message is indicated by the DCI, transmitted by a PDCCH/EPDCCH, and scrambled by a RA-RNTI; the value of the RA-RNTI is at least related to the index of an occupied initial subframe, the index of an occupied frequency resource and a CIL value when the UE transmits the random access signalling.

In the embodiment, the UE1 transmits random access signalling atUL subframes 0 to 4 of Frame 0, and then detects a PDCCH within an RAR detection time window configured by the system, to determine whether there is DCI scrambled by the RA-RNTI being transmitted, as shown in Fig. 6. In this embodiment, an initial subframe of the RAR detection time window is spaced from the random access signalling by 3 subframes, and the RAR detection time window occupies 10 subframes in length, that is, from subframe 8 of Frame 0 to subframe 7 of Frame 1. The system pre-defines that the DCI is repeatedly transmitted twice, and occupies two subframes; the UE1 detects the DCI scrambled by the RA-RNTI in the PDCCHs of subframe 8 and subframe 9 of Frame 0, to indicate the relevant information of the RAR message of the UE1. After successfully decoding the DCI, the UE1 acquires the information of the resource position occupied by the RAR message, for example, the RAR message is transmitted at the subframes 0 to 3 of Frame 1, so that the UE1 decodes the RAR message.

After successfully decoding the RAR message, the UE1 needs to determine information about the number of repeated transmission times of the RRC connection request message; information about the number of repeated transmission times of the RRC connection request message may be carried in the RAR message or configured by the system; correspondingly, information about the number of repeated transmission times of the RRC connection request message may be determined according to the RAR message or the system configuration;

the UE1 transmits the RRC connection request message according to the PUSCH resource indicated in the RAR message and the acquired information about the number of the repeated transmission times of the RRC connection request message.

Specific embodiment 4:

In the LTE system, there are MTC UEs, and the MTC UEs are classified into a Normal MTC UE and a CI MCT UE; PRACH resources may be allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy different PRBs; the two types of MTC UE are distinguished according to different configured Preambles for random access. For example, there are totally N random access sequences serving as Preambles for random access; a random access sequences are allocated to the CI MTC UE, and N-a random access sequences are allocated to the Normal MTC UE;

in the system, the number of repeat times of the Preamble transmitted by the CI MTC UE is Nrep;

in this embodiment, if UE1 is the CI MTC UE, then UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1. Fig. 4 is a diagram of formation of random access signalling transmitted by the UE1; when the preamble Format 0 is repeatedly transmitted for Nrep times, the UE1 transmits the random access signalling on the PRACH resources allocated by the system.

The system pre-defines the number of repeated transmission times NRARrep of the RAR message, and information of the resource position of the RAR message. In the embodiment, NRARrep=4, the resource position of the RAR message includes information of a PRB occupied in the frequency domain, for example, PRB Index20 to PRB Index25 are occupied; the eNB configures that the number of repeated transmission times of the RAR message containing the RAR information of the UE 1 is NRARrep=4, and the PRB resources occupied by the RAR message are PRB Index20 to PRB Index25;

In the embodiment, the UE1 transmits random access signalling at UL subframes 0 to 4 of Frame 0, and then detects an RAR message transmitted by the eNB within an RAR detection time window configured by the system, as shown in Fig. 8. An initial subframe of the RAR detection time window is spaced from the random access signalling by 3 subframes, and the RAR detection time window occupies 10 subframes in length, that is, from subframe 8 of Frame 0 to subframe 7 of Frame 1; each subframe may be used as the initial subframe for RAR message transmission, so that the UE1 tries to decode the RAR message from PRB Index20 to PRB Index25 of every 4 subframes until successfully decoding the RAR message in PRB Index20 to PRB Index25 of the subframes 1 to 4 of Frame 1.

After successfully decoding the RAR message, the UE1 needs to determine information about the number of repeated transmission times of the RRC connection request message; information about the number of repeated transmission times of the RRC connection request message may be carried in the RAR message or configured by the system; correspondingly, information about the number of repeated transmission times of the RRC connection request message may be determined according to the RAR message or the system configuration;

The UE1 transmits the RRC connection request message according to the PUSCH resource indicated in the RAR message and the acquired information about the number of the repeated transmission times of the RRC connection request message.

Specific embodiment 5:

In the LTE system, there are MTC UEs, and the MTC UEs are classified into a Normal MTC UE and a CI MCT UE; PRACH resources may be allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy different PRBs; the two types of MTC UE are distinguished according to different configured Preambles for random access. For example, there are totally N random access sequences serving as Preambles for random access; a random access sequences are allocated to the CI MTC UE, and N-a random access sequences are allocated to the Normal MTC UE; in the system, the number of repeat times of the Preamble transmitted by the CI MTC UE is Nrep; in this embodiment, if UE1 is the CI MTC UE, the UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1. Fig. 4 is a diagram of formation of random access signalling transmitted by the UE1; when the preamble Format 0 is repeatedly transmitted for Nrep times, the UE1 transmits the random access signalling on the PRACH resources allocated by the system.

The system pre-defines the number of repeated transmission times NRARrep of the RAR message, and information about a resource position of the RAR message. In the embodiment, NRARrep=4, the resource position of the RAR message includes information of a PRB occupied on the frequency domain, for example, PRB Index20 to PRB Index25 are occupied; the eNB configures that the number of repeated transmission times of the RAR message including the RAR information of the UE 1 is NRARrep=4, and the PRB resources occupied by the RAR message are PRB Index20 to PRB Index25;

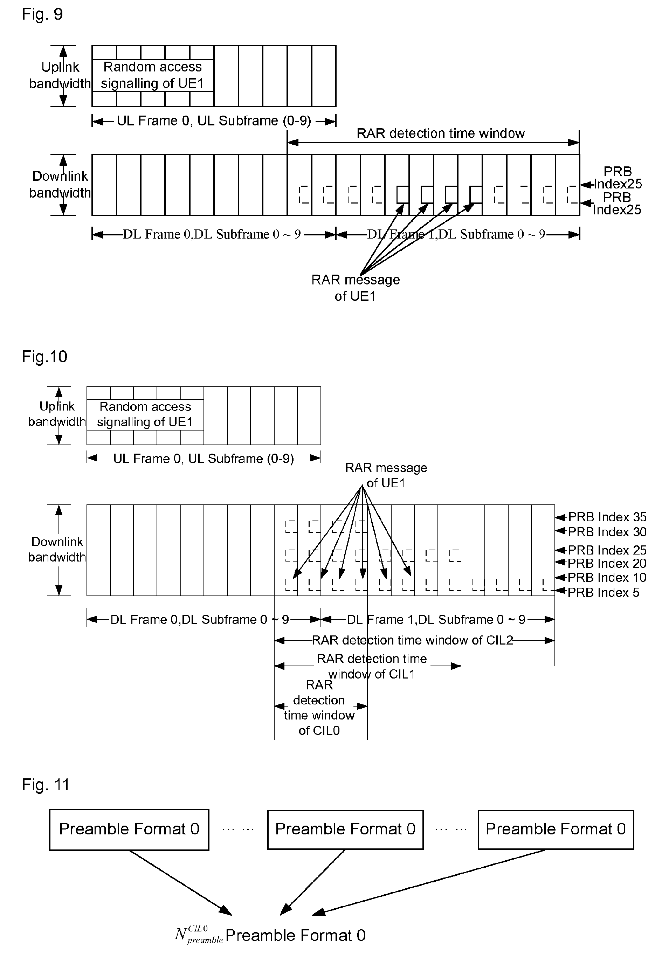

in the embodiment, the UE1 transmits random access signalling at UL subframes 0 to 4 of Frame 0, and then detects an RAR message transmitted by the eNB within an RAR detection time window configured by the system, as shown in Fig. 9. An initial subframe of the RAR detection time window is spaced from the random access signalling by 3 subframes, and the RAR detection time window occupies 12 subframes in length, that is, from subframe 8 of Frame 0 to subframe 9 of Frame 1; the initial subframe for RAR message transmission may be pre-defined by the system, for example, the indexes of 12 subframes in the RAR detection time window are re-numbered from 0 to 11, the Indexes meeting the formula below are used as the initial subframes for RAR message transmission:

$$\mathrm{mod}(\overline{Index}, B) = C;$$

where, mod(x, y) represents that x performs modular operation on y;
*Index* is valued from 0 to (Index-A);
Values of A, B and C are configured by the system;

in the embodiment, A=0, B=NRARrep=4, C=0; the Index of the initial subframe for RAR message transmission may be 0, 4 or 8, that is, the subframe 8 of Frame 0, the subframe 2 of Frame 1 or the subframe 6 of Frame 1 may be used as the initial subframe for RAR message transmission, so that the UE firstly detects the PRB Index20 to PRB Index25 of the subframe 8 and the subframe 9 of Frame 0, the subframe 0 and the subframe 1 of Frame 1, to try to decode the RAR message; if the RAR message is not successfully decoded, the UE then continuously detects the PRB Index20 to PRB Index25 of the subframe 2, the subframe 3, the subframe 4 and the subframe 5 of Frame 1, to try to decode the RAR message; if the RAR message is not successfully decoded, then the UE continuously detects the PRB Index20 to PRB Index25 of the subframe 6, the subframe 7, the subframe 8 and the subframe 9 of Frame 1, to try to decode the RAR message; if the RAR message is not successfully decoded, the random access flow is determined to be failed, and then UE1 retransmits random access sigaling.

In the embodiment, if successfully decoding the RAR message in the PRB Index20 to PRB Index25 of the subframe 2, the subframe 3, the subframe 4 and the subframe 5 of Frame 1, then UE1 needs to determine information about the number of repeated transmission times of the RRC connection request message; the information about the number of repeated transmission times of the RRC connection request message may be carried in the RAR message or configured in the system;

the UE1 transmits the RRC connection request message according to the PUSCH resource indicated in the RAR message and the acquired information about the number of repeated transmission times of the RRC connection request message.

Specific embodiment 6:

In the LTE system, there are MTC UEs, and the MTC UEs are classified into a Normal MTC UE and a CI MCT UE; PRACH resources are allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy the same PRB; the two types of MTC UE are distinguished according to different configured Preambles for random access. For example, there are totally N random access sequences serving as Preambles for random access; a random access sequences are allocated to the CI MTC UE, and N-a random access sequences are allocated to the Normal MTC UE;

in the system, the number of repeat times of the Preamble transmitted by the CI MTC UE is Nrep;

in this embodiment, if UE1 is the CI MTC UE, then UE1 randomly selects one of the a available Preambles as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1. Fig. 4 is a diagram of formation of random access signalling transmitted by the UE1; when the preamble Format 0 is repeatedly transmitted for Nrep times, the UE1 transmits the random access signalling on the PRACH resources allocated by the system.

The eNB needs to detect random access signalling transmitted by the UE1, and configures various detection time windows with different lengths for the random access signalling; each detection time window corresponds to the number of repeat times (the maximum number is Nrep) of the preamble Format 0; the eNB tries to adopt various detection time windows to detect the random access signalling transmitted by the UE1, and determines the CIL of the UE1 according to the number of repeat times of the preamble Format 0 corresponding to the minimum detection time window of the successfully detected random access signalling transmitted by the UE1. In this embodiment, it is supposed that there are totally 3 CILs, which are CIL0 (corresponding to coverage improvement 5dB), CIL1 (corresponding to coverage improvement 10dB) and CIL2 (corresponding to coverage improvement 15dB), the eNB determines that the CIL of the UE1 is CIL2 according to the principle above;

the system pre-defines the number $N_{RAR}^{CIL}$ of repeated transmission times of the RAR message corresponding to each CIL, information about the frequency domain resource position of the RAR message, and the information of the corresponding RAR message detection time windows. If the number $N_{RAR}^{CIL0}$ of the repeated transmission times of the RAR message corresponding to CIL0 is equal to 2, then the frequency domain resources occupied by the RAR message are PRB Index30 to PRB Index35, and the RAR message detection time window occupies 4 subframes; if the number $N_{RAR}^{CIL1}$ of the repeated transmission times of the RAR message corresponding to CIL1 is equal to 4, then the frequency domain resources occupied by the RAR message are PRB Index20 to PRB Index25, and the RAR message detection time window occupies 8 subframes; if the number $N_{RAR}^{CIL2}$ of the repeated transmission times of the RAR message corresponding to CIL2 is equal to 6, then the frequency domain resources occupied by the RAR message are PRB Index5 to PRB Index10, and the RAR message detection time window occupies 12 subframes;

in the embodiment, the UE1 transmits random access signalling at UL subframes 0 to 4 of Frame 0, and detects an RAR message transmitted by the eNB to the UE1 respectively according to the numbers, which are configured by the system and correspond to CIL0, CIL1 and CIL2, of repeated transmission times of the RAR message, the frequency domain resources occupied by the RAR message and the information of the RAR message detection time window. As shown in Fig. 10, the UE1 firstly detects the RAR message transmitted by the eNB in the RAR message detection time window corresponding to CIL0; if the RAR message is not successfully detected, then the UE1 continuously detects the RAR message transmitted by the eNB in the RAR message detection time window corresponding to CIL1; if the RAR message is not successfully detected, then the UE1 continuously detects the RAR message transmitted by the eNB in the RAR message detection time window corresponding to CIL2; if the RAR message is not successfully detected either, then a random access flow is determined to be failed, and the UE1 retransmits random access signalling.

In the embodiment, if successfully decoding the RAR message in the PRB Index5 to PRB Index10 of the subframe 8 and the subframe 9 of Frame 0 and the subframe 0, the subframe 1, the subframe 2 and the subframe 3 of Frame 0, which correspond to CIL2, then the UE1 determines that CIL is CIL2.

the UE1 needs to determine information about the number of repeated transmission times of the RRC connection request message; the information about the number of repeated transmission times of the RRC connection request message may be carried in the RAR message, or determined according to information about the number of repeated transmission times of the RRC connection request message pre-defined in the system, or determined according to the CIL (CIL2); the UE1 transmits the RRC connection request message according to the PUSCH resource indicated in the RAR message and the acquired information about the number of repeated transmission times of the RRC connection request message.

Specific embodiment 7:

In the LTE system, there are MTC UEs, and the MTC UEs are classified into a Normal MTC UE and a CI MCT UE; initially accessed PRACH resources are allocated to the Normal MTC UE and the CI MTC UE by at least one of the following modes: time division multiplexing, frequency division multiplexing and code division multiplexing. In the embodiment, the initially accessed PRACH resources allocated to the Normal MTC UE and the CI MTC UE occupy the same PRB; the two types of MTC UE are distinguished according to different configured Preambles for random access. For example, there are totally N random access sequences serving as Preambles for random access; a random access sequences are allocated to the CI MTC UE, and N-a random access sequences are allocated to the Normal MTC UE; the eNB totally supports the CI MTC UE of 3 levels in the SIB, and the 3 levels include CIL0, CIL1 and CIL2; a coverage improvement indicator of each CIL and the proportion relation of the Preamble quantity configured at each CIL may be configured in the SIB, as shown in Table 1:

Table 1

| CIL | Coverage improvement indicator | Proportion relation of Preamble quantity configured at each CIL |
|---|---|---|
| 0 | 5dB | NCIL0: NCIL1: NCIL2=b: c: d;<br>NCIL0:quantity of Preambles available for |
| 1 | 10dB | CIL0;<br>NCIL1: quantity of Preambles available for CIL1; |
| 2 | 15dB | NCIL2: quantity of Preambles available for CIL2;<br>b, c and d are greater than or equal to 0. |

in this embodiment, if UE1 is the CI MTC UE and belongs to CIL0, then the UE1 randomly selects one of the Preambles available for CIL0 as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1.

The number of repeat times of the Preamble Format corresponding to each CIL is configured by the system; for example, the number of repeat times of the Preamble Format 0 corresponding to CIL0 is $N_{preamble}^{CIL0}$, the number of repeat times of the Preamble Format 0 corresponding to CIL1 is $N_{preamble}^{CIL1}$, and the number of repeat times of the Preamble Format 0 corresponding to CIL2 is $N_{preamble}^{CIL2}$. Fig. 11 is a diagram of formation of random access signalling transmitted by the UE1; the Preamble Format 0 is repeatedly transmitted for $N_{preamble}^{CIL0}$ times, and the UE1 transmits the random access signalling on the PRACH resource allocated by the system.

In the embodiment, if $N_{preamble}^{CIL0}$ is equal to 5, then UE1 transmits the random access signalling on the UL subframes 0 to 4 of Frame 0, as shown in Fig. 7.

The eNB detects the random access signalling transmitted by the UE1, and acquires the CIL, which is CIL0, of the UE1 according to the Preamble Index1.

The eNB determines information about the number of the repeated transmission times of the RAR message containing RAR information of the UE1 according to the CIL0. The resource position of the RAR message at each CIL is indicated by the DCI, transmitted by the PDCCH, and scrambled by the RA-RNTI.

The UE1 may detect a PDCCH within an RAR detection time window configured by the system, to determine whether there is DCI scrambled by the RA-RNTI being transmitted. The position of the initial subframe of the RAR detection time window, the quantity of subframes occupied by repeated transmission of the PDCCH and the resource size occupied by the DCI in each subframe are determined by the CIL of the UE1 or configured by the system or transmitted to the UE1 through a downlink channel.

In the embodiment, as shown in Fig. 7, the initial subframe of the RAR detection time window is spaced from the random access signalling by 3 subframes, and the RAR detection time window occupies 10 subframes in length, that is, from subframe 8 of Frame 0 to subframe 7 of Frame 1. The repeated transmission of the DCI scrambled by the RA-RNTI occupies 2 subframes, and occupies continuous subframes; in each subframe, the size of the resources occupied by the DCI is 1 Unit (the Unit corresponds to Nsc subcarriers *Nsym OFDM signs); the UE1 detects the DCI scrambled by the RA-RNTI in the PDCCHs of the subframe 9 of Frame 0 and the subframe 0 of Frame 0.

After successfully decoding the DCI, the UE1 acquires the information of the resource position occupied by the RAR message, and the information of the resource position includes at least one piece of following information: information about a frequency domain position, information about a time domain occupation subframe, and information about the number of times of repeatedly transmitting RAR.

In the embodiment, the RAR message is transmitted at the subframes 1 to 4 of Frame 1; the number of repeated transmission times of the RAR message is equal to 4, and the occupied frequency resources are PRB Index5 to PRB Index10.

After successfully decoding the RAR message, the UE1 needs to determine information about the number of repeated transmission times of the RRC connection request message; the information about the number of repeated transmission times of the RRC connection request message may be determined according to information about the number of repeat times carried in the RAR message, or determined according to the pre-defined information about the number of repeated transmission times of the RRC connection request message, or determined according to the CIL of the UE1.

The UE1 transmits the RRC connection request message according to the PUSCH resources indicated in the RAR message and the information about the number of repeated transmission times of the RRC connection request message;

the RRC connection request message carries at least one piece of following information: adjustment information of the number of repeated transmission times of the RAR message, adjustment information of DL CIL, and information about the number of repeat times of a conflict resolution message; the eNB may adjust the number of repeat times of the conflict resolution message based on the information.

In addition to the embodiment, the RAR message may further carry adjustment information of UE1 CIL, and the UE1 may adjust its CIL according to this information.

Specific embodiment 8:

In the LTE system, there are MTC UEs, and the MTC UEs are classified into a Normal MTC UE and a CI MCT UE; the system may adopt at least one of the following modes: time division multiplexing, frequency division multiplexing and code division multiplexing, to allocate initially accessed PRACH resources to the Normal MTC UE and the CI MTC UE. In the embodiment, the initially accessed PRACH resources allocated to the Normal MTC UE and the CI MTC UE occupy the same PRB; the two types of MTC UE are distinguished according to different random access sequences. For example, there are totally N random access sequences serving as Preambles for random access; a random access sequences are allocated to the CI MTC UE, and N-a random access sequences are allocated to the Normal MTC UE; the CI MTC UE is classified into 3 levels, including CIL0, CIL1 and CIL2; a coverage improvement indicator of each CIL and the proportion relation of the Preamble quantity configured at each CIL are as shown in Table 2:

Table 2

| CIL | Coverage improvement indicator | Proportion relation of the Preamble quantity configured by each CIL |
|---|---|---|
| | 5dB | NCIL0: NCIL1: NCIL2=b: c: d;<br>NCIL0: quantity of Preambles available for CIL0; |

(continued)

| CIL | Coverage improvement indicator | Proportion relation of the Preamble quantity configured by each CIL |
|---|---|---|
| | 10dB | NCIL1: quantity of Preambles available for CIL1;<br>NCIL2: quantity of Preambles available for CIL2; |
| | 15dB | b, c and d are greater than or equal to 0. |

The number of repeat times of the Preamble selected by each CIL is configured by the system; for example, the number of repeat times of the Preamble corresponding to CIL0 is $N_{preamble}^{CIL0}$, the number of repeat times of the Preamble corresponding to CIL1 is $N_{preamble}^{CIL1}$, and the number of repeat times of the Preamble corresponding to CIL2 is $N_{preamble}^{CIL2}$;

in this embodiment, if UE1 is the CI MTC UE and belongs to CIL0, then UE1 randomly selects one of the Preambles available for CIL0 as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1.

Fig. 11 is a diagram of formation of random access signalling transmitted by the UE1; the Preamble Format 0 is repeatedly transmitted for $N_{preamble}^{CIL0}$ times, and the UE1 transmits the random access signalling on the PRACH resource allocated by the system.

In the embodiment, if $N_{preamble}^{CIL0}$ is equal to 5, then UE1 transmits the random access signalling on the UL subframes 0 to 4 of Frame 0, as shown in Fig. 7.

The eNB detects the random access signalling transmitted by the UE1, and acquires the CIL, which is CIL0, of the UE1 according to the Preamble Index1.

The system pre-defines the number $N_{RAR}^{CIL}$ of repeated transmission times of the RAR message corresponding to each CIL, information of the frequency domain resource position of the RAR message, and the information of the corresponding RAR message detection time windows. If the number $N_{RAR}^{CIL0}$ of the repeated transmission times of the RAR message corresponding to CIL0 is equal to 2, then the frequency domain resources occupied by the RAR message are PRB Index30 to PRB Index35, and the RAR message detection time window occupies 4 subframes; if the number $N_{RAR}^{CIL1}$ of the repeated transmission times of the RAR message corresponding to CIL1 is equal to 4, then the frequency domain resources occupied by the RAR message are PRB Index20 to PRB Index25, and the RAR message detection time window occupies 8 subframes; if the number $N_{RAR}^{CIL2}$ of the repeated transmission times of the RAR message corresponding to CIL2 is equal to 6, then the frequency domain resources occupied by the RAR message are PRB Index5 to PRB Index10, and the RAR message detection time window occupies 12 subframes;

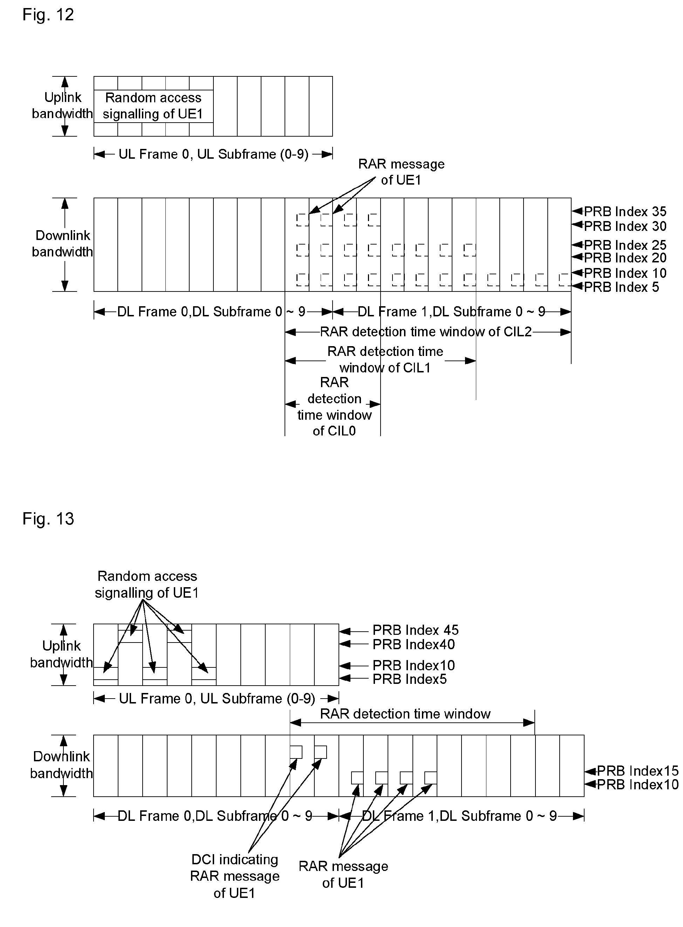

in the embodiment, the UE1 transmits random access signalling on UL subframes 0 to 4 of Frame 0, and may detect an RAR message transmitted by the eNB to the UE1 respectively according to the numbers, which are configured by the system and correspond to CIL0, CIL1 and CIL2, of repeated transmission times of the RAR message, the frequency domain resources occupied by the RAR message and the information of the RAR message detection time window. As shown in Fig. 12, the UE1 successfully decodes the RAR message in the PRB Index30 to PRB Index35 of the subframe 8 and the subframe 9 of Frame 0 corresponding to CIL0.

After successfully decoding the RAR message, the UE1 needs to determine information about the number of repeated transmission times of the RRC connection request message; the information about the number of repeated transmission times of the RRC connection request message may be determined according to information about the number of repeat times carried in the RAR message, or determined according to the pre-defined information about the number of repeated transmission times of the RRC connection request message, or determined according to the CIL (CIL2) of the UE1;

the UE1 transmits the RRC connection request message according to the PUSCH resources indicated in the RAR message and the information about the number of repeated transmission times of the RRC connection request message;

the RRC connection request message carries at least one piece of following information: adjustment information of the number of repeated transmission times of the RAR message, adjustment information of DL CIL, and information about the number of repeat times of a conflict resolution message; the eNB may adjust the number of repeat times of the conflict resolution message based on the information.

In addition to the embodiment, the RAR message may further carry adjustment information of UE1 CIL, and the UE1 may adjust its CIL according to this information.

Specific embodiment 9:

In the LTE system, there are MTC UEs, and the MTC UEs are classified into a Normal MTC UE and a CI MCT UE; the system may allocate initially accessed PRACH resources to the Normal MTC UE and the CI MTC UE by adopting at least one of the following modes: time division multiplexing, frequency division multiplexing and code division multiplexing. In the embodiment, the initially accessed PRACH resources allocated to the Normal MTC UE and the CI MTC UE occupy the same PRB; the two types of MTC UE are distinguished according to different random access sequences. For example, there are totally N random access sequences serving as Preambles for random access; a random access sequences are allocated to the CI MTC UE, and N-a random access sequences are allocated to the Normal MTC UE;

The CI MTC UE is classified into 3 levels, including CIL0, CIL1 and CIL2; a coverage improvement indicator of each CIL and the proportion relation of the Preamble quantity configured at each CIL are as shown in Table 3:

Table 3

| CIL | Coverage improvement indicator | Proportion relation of the Preamble quantity configured by each CIL |
|---|---|---|
| | 5dB | NCIL0: NCIL1: NCIL2=b: c: d; |
| | 10dB | NCIL0: quantity of Preambles available for CIL0; |
| | 15dB | NCIL1: quantity of Preambles available for CIL1; NCIL2: quantity of Preambles available for CIL2; b, c and d are greater than or equal to 0. |

In this embodiment, if UE1 is the CI MTC UE and belongs to CIL0, then UE1 randomly selects one of the Preambles available for CIL0 as the Preamble; for example, the Index of the selected Preamble is Index1, and the sequence is Sequence1; furthermore, a Preamble Format is generated according to a mode pre-defined by the system; Fig. 3 provides a formation mode of a preamble format 0, wherein CP is a cyclic prefix and configured by the system; T_Sequence1 is a time domain expression form of Sequence1.

The number of repeat times of the Preamble Format corresponding to each CIL is configured by the system; for example, the number of repeat times of the Preamble Format 0 corresponding to CIL0 is $N_{preamble}^{CIL0}$, the number of repeat times of the Preamble Format 0 corresponding to CIL1 is $N_{preamble}^{CIL1}$, and the number of repeat times of the Preamble corresponding to CIL2 is $N_{preamble}^{CIL2}$. Fig. 11 is a diagram of formation of random access signalling transmitted by the UE1; the Preamble Format 0 is repeatedly transmitted for $N_{preamble}^{CIL0}$ times, and the UE1 transmits the random access signalling on the PRACH resource allocated by the system.

In the embodiment, if $N_{preamble}^{CIL0}$ is equal to 5, and the uplink bandwidth of the system is 10MHz, then totally 50 PRBs are supported; in order to obtain a frequency diversity gain, the Preamble Format 0 transmitted by the UE1 for 5 times may be transmitted by way of frequency hopping; different uplink bandwidths may be configured with different hopping interfaces. In the embodiment, the hopping interval includes 35 PRBs; as shown in Fig. 13, the UE1 transmits the random access signalling on the UL subframes 0 to 4 of Frame 0; the PRACH resources are respectively located on the PRB Index5 to PRB Index10 of the subframe 0, the subframe 2 and the subframe 4 and the PRB Index40 to PRB Index45 of the subframe 1 and the subframe 3.

The eNB detects the random access signalling transmitted by the UE1, and acquires the CIL, which is CIL0, of the UE1 according to the Preamble Index1.

The eNB determines information about the number of the repeated transmission times of the RAR message including the RAR information of the UE1. The resource position of the RAR message of each CIL is indicated by the DCI, transmitted by the PDCCH, and scrambled by the RA-RNTI.

In the embodiment, the UE1 may detect the PDCCH in an RAR detection time window, to determine whether there is DCI scrambled by the RA-RNTI being transmitted; as shown in Fig. 13, an initial subframe of the RAR detection time window is spaced from the random access signalling by 3 subframes, and the RAR detection time window occupies 10 subframes in length, that is, from subframe 8 of Frame 0 to subframe 7 of Frame 1. The system pre-defines that the DCI is transmitted repeatedly twice, and two subframes are occupied; the UE1 detects the DCI scrambled by the RA-RNTI on the PDCCHs of the subframe 8 and the subframe 9 of Frame 0, to indicate the RAR message of the UE1. After successfully decoding the RAR message, the UE1 acquires information about the number of repeated transmission times of the RAR message and the information about occupied resource position; for example, the RAR message is transmitted at the subframes 0 to 3 of Frame 1, the PRB Index10 to PRB Index15 are occupied, and the number of repeated transmission times is 4.

After the UE1 successfully decodes the RAR message, information about the number of repeated transmission times of the RRC connection request message may be determined according to information about the number of repeat times carried in the RAR message, or determined according to the pre-defined information about the number of repeated transmission times of the RRC connection request message, or determined according to the CIL (CIL0).

The UE1 transmits the RRC connection request message according to information about the number of repeated transmission times of the RRC connection request message;

the RRC connection request message carries at least one piece of following information: adjustment information of the number of repeated transmission times of the RAR message, adjustment information of DL CIL, and information about the number of repeat times of a conflict resolution message; the eNB may adjust the number of repeat times of the conflict resolution message based on the information.

It can be seen from the descriptions above that a technology, which may be either a method or a device, for processing a random access response message according to the embodiments of the present disclosure can improve the random access performance of the MTC UE, lower the probability of a random access collision and reduce an access delay.

Those skilled in the art should know that all or part of the steps for implementing the method embodiments may be implemented by hardware relevant to program instructions, and the programs may be stored in a computer readable storage medium; when the programs are executed, the steps of the method embodiments are carried out; the storage medium includes various media capable of storing program codes, such as a mobile storage device, a Read-Only Memory (ROM), a Random Access Memory (RAM), a magnetic disk and an optical disk.

Or, when implemented in the form of software function modules and sold or used as independent products, the integrated units also may be stored in a computer readable storage medium. Based on such an understanding, an essential part or a part making a contribution to the traditional art of the technical solutions of the embodiments of the present disclosure may be reflected in the form of software products; the computer software products are stored in a storage medium, and include a plurality of instructions configured to enable computer equipment (which may be a personal computer, a server, network equipment and the like) to carry out all or part of the methods of the respective embodiments. The storage medium includes: various media capable of storing program codes, such as mobile storage equipment, ROM, RAM, a magnetic disk and an optical disk.

The above mentioned is only specific implementation modes of the present disclosure, but is not intended to limit the scope of protection of the present disclosure. In the technical scope disclosed by the present disclosure, any person skilled in the art may easily know that variations or replacements shall fall within the scope of protection of the present disclosure. Thus, the scope of protection of the present disclosure shall depend on the scope of protection of the claims.

**Claims**

1. A method for processing a random access response message, comprising:

transmitting, by a first node, a random access response message through a downlink channel, wherein the random access response message carries random access response information aiming at a second node.

2. The method according to claim 1, wherein the second node at which the random access response information, which is carried in a same random access response message transmitted by the first node, aims is of a same type or multiple types.

3. The method according to claim 2, wherein the second node is classified according to at least one of following classification rules:

classifying the second node into one or multiple types according to different coverage improvement levels needed to be supported by the second node;

classifying the second node into one or multiple types according to different numbers of repeated transmission times of a random access sequence, which are needed to be supported by the second node;

classifying the second node into one or multiple types according to different numbers of repeated use times of a Physical Broadcast Channel (PBCH) when the second node successfully decodes the PBCH;

classifying the second node into one or multiple types according to different numbers of repeat times of a Master Information Block (MIB) when the second node successfully decodes the MIB;

classifying the second node into one or multiple types according to different numbers of repeat times of a System Information Block (SIB) when the second node successfully decodes the SIB; and

classifying the second node into one or multiple types according to different numbers of repeat times of the MIB when the second node successfully decodes the PBCH.

4. The method according to claim 3, wherein the coverage improvement level comprises one or multiple levels; the coverage improvement level needed to be supported by the second node is configured by a system, or configured by the first node in the SIB or in Downlink Control Information (DCI).

5. The method according to claim 3, wherein the coverage improvement level comprises an uplink coverage improvement level and/or a downlink coverage improvement level.

6. The method according to any one of claims 1 to 5, further comprising:

configuring, by a system, configuration information of a transmitting mode of the random access response message; or,

transmitting, by the first node, configuration information of a transmitting mode of the random access response message in an SIB or DCI.

7. The method according to any one of claims 1 to 5, further comprising:

configuring, by a system, position information of the random access response message; or,

transmitting, by the first node, position information of the random access response message in an SIB or DCI.

8. The method according to claim 7, wherein there is one piece of or there are multiple pieces of position information of the random access response message.

9. The method according to claim 8, wherein the second node at which the random access response information, which is carried in the same random access response message transmitted from a resource position indicated by each piece of position information, aims comprises at least one of following second nodes:

second nodes of a same type;

second nodes at a same coverage improvement level;

second nodes with a same number of repeated transmission times of a random access sequence;

second nodes with a same Random Access Radio Network Temporary Identity (RA-RNTI);

one or multiple types of second nodes configured by the system;

second nodes which are configured by the system and support different coverage improvement levels; and

second nodes which are configured by the system and support different numbers of repeated transmission times of the random access sequence.

10. The method according to claim 8, wherein each piece of position information of the random access response message comprises at least one piece of following information:

initial position information of the random access response message;

the amount of a subframe occupied by the random access response message;

information of a frequency-domain subcarrier occupied by the random access response message; and

information of a Physical Resource Block (PRB) occupied by the random access response message.

11. The method according to claim 10, wherein the initial position information of the random access response message comprises at least one piece of following information:

information of a subframe where an initial resource is located;
information of a frame where the initial resource is located;
Information of a PRB where the initial resource is located;
information of a subcarrier where the initial resource is located; and
information about the amount of a subframe between the initial resource and random access signalling transmitted by the second node.

12. The method according to any one of claims 1 to 5, further comprising:

configuring, by a system, information about the number of repeated transmission times of the random access response message; or,
transmitting, by the first node, information about the number of repeated transmission times of the random access response message in an SIB or DCI.

13. The method according to claim 12, wherein there is one piece of there are multiple pieces of information about the number of repeated transmission times of the random access response message.

14. The method according to claim 13, wherein the second node at which the random access response information, which is carried in the random access response message transmitted according to each piece of information about the number of repeated transmission times, aims comprises at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

15. The method according to any one of claims 1 to 5, further comprising:

configures, by a system, position information of a detection time window of the random access response message; or,
transmitting, by the first node, position information of a detection time window of the random access response message in an SIB or DCI.

16. The method according to claim 15, wherein there is one piece of or there are multiple pieces of position information of the detection time window of the random access response message.

17. The method according to claim 16, wherein a second node configured with a same piece of position information of the detection time window among the second node comprises at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

18. The method according to claim 15, wherein the position information of the detection time window comprises at least one piece of following information:

information about a detection mode;
information about an initial position of the detection time window;
information about a length of the detection time window; and

information about the amount of a subframe between the initial position of the detection time window and random access signalling transmitted by the second node.

19. The method according to claim 1, wherein the random access response information comprises at least one piece of following information:

type information of the second node;
information about a coverage improvement level of the second node;
information about the number of repeated transmission times of a random access sequence of the second node;
information about the number of repeated transmission times of a Physical Uplink Control Channel (PUCCH) of the second node;
information about the number of repeated transmission times of a Physical Uplink Shared Channel (PUSCH) of the second node;
information about the number of repeated transmission times of a Radio Resource Control (RRC) Connection Request (CR) message transmitted by the second node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the PUSCH of the second node; and
adjustment information of the number of repeated transmission times of the RRC connection request of the second node.

20. The method according to claim 19, wherein the RRC connection request message comprises at least one piece of following information:

the type information of the second node;
the information about a coverage improvement level of the second node;
the information about the number of repeated transmission times of the random access sequence of the second node;
information about the number of repeated transmission times of a Physical Downlink Control Channel (PDCCH) of the second node;
information about the number of repeated transmission times of an Enhanced Physical Downlink Control Channel (EPDCCH) of the second node;
information about the number of repeated transmission times of a Physical Downlink Shared Channel (PDSCH) of the second node;
information about the number of repeated transmission times of a conflict resolution message transmitted by the first node;
the adjustment information of the coverage improvement level of the second node;
the adjustment information of the number of repeated transmission times of the random access sequence of the second node;
adjustment information of the number of repeated transmission times of the PUCCH of the second node;
adjustment information of the number of repeated transmission times of the EPUCCH of the second node;
adjustment information of the number of repeated transmission times of the PDSCH of the second node; and
adjustment information of the number of repeated transmission times of the conflict resolution message transmitted by the first node.

21. The method according to claim 6, wherein the configuration by the system comprises: configuration by a standard, configuration by a network or configuration by a network high-level.

22. The method according to claim 1, further comprising: before the step of transmitting, by the first node, a random access response message through a downlink channel,
transmitting, by the second node, random access signalling through an uplink channel.

23. The method according to claim 22, wherein a resource of the random access signalling is transmitted by way of frequency hopping.

24. The method according to claim 23, wherein a granularity of the frequency hopping is determined according to at least one piece of following information:

an uplink channel bandwidth supported by the first node;
an uplink channel bandwidth supported by the second node;
a coverage improvement level of the second node; and
information about the number of repeated transmission times of a random access sequence of the second node.

25. The method according to claim 23, wherein the number of repeat times of the random access signalling transmitted by the second node is indicated by at least one piece of following information:

a coverage improvement level of the second node;
a granularity of the frequency hopping;
a highest coverage improvement level in coverage improvement levels configured by the first node; and
a coverage improvement level pre-defined in the coverage improvement levels configured by the first node.

26. The method according to claim 25, wherein the coverage improvement level of the second node is determined by the second node, transmitted by the first node through the random access response message, or transmitted by the first node through high-level signalling.

27. The method according to claim 1, wherein the first node comprises at least one of followings: a Macro cell, a Micro cell, a Pico cell, a Femto cell, a home cell, a Low Power Node (LPN), and a Relay Station; and the second node comprises one or more terminals or is a terminal group.

28. A first node, comprising:

a message generation unit configured to generate a random access response message, wherein the random access response message carries random access response information aiming at a second node; and
a communication unit configured to transmit the random access response message generated by the message generation unit through a downlink channel.

29. The first node according to claim 28, further comprising:

a classification unit configured to classify the second node at which the random access response information, which is carried in a same random access response message transmitted by the communication unit, aims into a same type or multiple types.

30. The first node according to claim 29, wherein the classification unit is further configured to classify the second node according to at least one of following rules:

classifying the second node into one or multiple types according to different coverage improvement levels needed to be supported by the second node;
classifying the second node into one or multiple types according to different numbers of repeated transmission times of a random access sequence, which are needed to be supported by the second node;
classifying the second node into one or multiple types according to different numbers of repeated use times of a Physical Broadcast Channel (PBCH) when the second node successfully decodes the PBCH;
classifying the second node into one or multiple types according to different numbers of repeat times of a Master Information Block (MIB) when the second node successfully decodes the MIB;
classifying the second node into one or multiple types according to different numbers of repeat times of a System Information Block (SIB) when the second node successfully decodes the SIB; and
classifying the second node into one or multiple types according to different numbers of repeat times of the MIB when the second node successfully decodes the PBCH.

31. The first node according to claim 30, wherein the coverage improvement level comprises one or multiple levels; the coverage improvement level needed to be supported by the second node is configured by a system, or configured by the classification unit in the SIB or in Downlink Control Information (DCI);
correspondingly, the classification unit is further configured to configure the coverage improvement level needed to be supported by the second node in the SIB or the DCI.

**32.** The first node according to claim 30, wherein the coverage improvement level comprises an uplink coverage improvement level and/or a downlink coverage improvement level.

**33.** The first node according to any one of claims 28 to 32, wherein the communication unit is further configured to:

transmit configuration information of a transmitting mode of the random access response message in an SIB or DCI.

**34.** The first node according to any one of claims 28 to 32, wherein the communication unit is further configured to:

transmit position information of the random access response information in an SIB or DCI.

**35.** The first node according to claim 34, wherein there is one piece of or there are multiple pieces of position information of the random access response message.

**36.** The first node according to claim 35, wherein the second node at which the random access response information, which is carried in the same random access response message transmitted from a resource position indicated by each piece of position information, aims comprises at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

**37.** The first node according to claim 35, wherein each piece of position information of the random access response message comprises at least one piece of following information:

initial position information of the random access response message;
the amount of a subframe occupied by the random access response message;
information of a frequency-domain subcarrier occupied by the random access response message; and
Information of a Physical Resource Block (PRB) occupied by the random access response message.

**38.** The first node according to claim 37, wherein the initial position information of the random access response message comprises at least one piece of following information:

information of a subframe where an initial resource is located;
information of a frame where the initial resource is located;
Information of a PRB where the initial resource is located;
information of a subcarrier where the initial resource is located; and
information about the amount of a subframe between the initial resource and random access signalling transmitted by the second node.

**39.** The first node according to any one of claims 28 to 32, wherein the communication unit is further configured to:

transmit information about the number of repeated transmission times of the random access response message in an SIB or DCI.

**40.** The device according to claim 39, wherein there is one piece of there are multiple pieces of information about the number of repeated transmission times of the random access response message.

**41.** The first node according to claim 40, wherein the second node at which the random access response information, which is carried in the random access response message transmitted according to each piece of information about the number of repeated transmission times, aims comprises at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

42. The first node according to any one of claims 28 to 32, wherein the communication unit is further configured to:

transmit position information of a detection time window of the random access response message in an SIB or DCI.

43. The first node according to claim 42, wherein there is one piece of or there are multiple pieces of position information of the detection time window of the random access response message.

44. The first node according to claim 43, wherein the second node configured with a same piece of position information of the detection time window comprises at least one of following second nodes:

second nodes of a same type;
second nodes at a same coverage improvement level;
second nodes with a same number of repeated transmission times of a random access sequence;
second nodes with a same Random Access Radio Network Temporary Identity (RA-RNTI);
one or multiple types of second nodes configured by the system;
second nodes which are configured by the system and support different coverage improvement levels; and
second nodes which are configured by the system and support different numbers of repeated transmission times of the random access sequence.

45. The first node according to claim 32, wherein the position information of the detection time window comprises at least one piece of following information:

information about a detection mode ;
information about an initial position of the detection time window;
information about a length of the detection time window; and
information about the amount of a subframe between the initial position of the detection time window and random access signalling transmitted by the second node.

46. The first node according to claim 28, wherein the random access response information comprises at least one piece of following information:

type information of the second node;
information about a coverage improvement level of the second node;
information about the number of repeated transmission times of a random access sequence of the second node;
information about the number of repeated transmission times of a Physical Uplink Control Channel (PUCCH) of the second node;
information about the number of repeated transmission times of a Physical Uplink Shared Channel (PUSCH) of the second node;
information about the number of repeated transmission times of a Radio Resource Control (RRC) Connection Request (CR) message transmitted by the second node;
adjustment information of the coverage improvement level of the second node;
adjustment information of the number of repeated transmission times of the random access sequence of the second node;
adjustment information of the number of repeated transmission times of the PUCCH of the second node;
adjustment information of the number of repeated transmission times of the PUSCH of the second node; and
adjustment information of the number of repeated transmission times of the RRC connection request of the second node.

**47.** The first node according to claim 46, wherein the RRC connection request message comprises at least one piece of following information:

the type information of the second node;
the information about a coverage improvement level of the second node;
the information about the number of repeated transmission times of the random access sequence of the second node;
information about the number of repeated transmission times of a Physical Downlink Control Channel (PDCCH) of the second node;
information about the number of repeated transmission times of an Enhanced Physical Downlink Control Channel (EPDCCH) of the second node;
information about the number of repeated transmission times of a Physical Downlink Shared Channel (PDSCH) of the second node;
information about the number of repeated transmission times of a conflict resolution message transmitted by the first node;
the adjustment information of the coverage improvement level of the second node;
the adjustment information of the number of repeated transmission times of the random access sequence of the second node;
adjustment information of the number of repeated transmission times of the PUCCH of the second node;
adjustment information of the number of repeated transmission times of the EPUCCH of the second node;
adjustment information of the number of repeated transmission times of the PDSCH of the second node; and
adjustment information of the number of repeated transmission times of the conflict resolution message transmitted by the first node.

**48.** The first node according to claim 36, wherein the configuration by the system comprises: configuration by a standard, configuration by a network or configuration by a network high-level.

**49.** The first node according to claim 28, wherein the communication unit is further configured to, before transmitting the random access response message through the downlink channel, receive random access signalling transmitted by the second node through an uplink channel.

**50.** The first node according to claim 49, wherein a resource of the random access signalling is transmitted by way of frequency hopping.

**51.** The first node according to claim 50, wherein a granularity of the frequency hopping is determined according to at least one piece of following information:

an uplink channel bandwidth supported by the first node;
an uplink channel bandwidth supported by the second node;
a coverage improvement level of the second node; and
information about the number of repeated transmission times of a random access sequence of the second node.

**52.** The first node according to claim 50, wherein the number of repeat times of the random access signalling transmitted by the second node is indicated by at least one piece of following information:

a coverage improvement level of the second node;
a granularity of the frequency hopping;
a highest coverage improvement level in coverage improvement levels configured by the first node; and
a coverage improvement level pre-defined in the coverage improvement levels configured by the first node.

**53.** The first node according to claim 52, wherein the coverage improvement level of the second node is determined by the second node, or transmitted by the communication unit through the random access response message or through high-level signalling;
correspondingly, the communication unit is further configured to transmit the coverage improvement level of the second node through the random access response message or the high-level signalling.

**54.** The first node according to claim 28, wherein,
the first node comprises at least one of followings: a Macro cell, a Micro cell, a Pico cell, a Femto cell, a home cell, a Low Power Node (LPN), and a Relay Station;

the second node comprises one or more terminals or is a terminal group.

55. A computer storage medium having stored therein computer executable instructions configured to execute the method for processing a random access response message according to any one of claims 1 to 27.

Fig. 1

a first node transmits a random access response
message through a downlink channel

101

Fig. 2

| Message generation unit 21 | Communication unit 22 | Classification unit 23 |

Fig. 3

| CP | Time domain sequence 1 |

Preamble format 0

Fig. 4

| Preamble Format 0 | ··· ··· | Preamble Format 0 | ··· ··· | Preamble Format 0 |

$N_{rep}$ Preamble Formats 0

Fig. 5

Fig. 6

Fig. 7

Uplink bandwidth

Random access signalling of UE1

|← UL Frame 0, UL Subframe (0-9) →|

RAR detection time window

Downlink bandwidth

|← DL Frame 0,DL Subframe 0 ~ 9 →|← DL Frame 1,DL Subframe 0 ~ 9 →|

2 Units occupied, and DCI indicating RAR message of UE1

RAR message of UE1

Fig. 8

Uplink bandwidth

Random access signalling of UE1

|← UL Frame 0, UL Subframe (0-9) →|

RAR detection time window

Downlink bandwidth

PRB Index25
PRB Index25

|← DL Frame 0,DL Subframe 0 ~ 9 →|← DL Frame 1,DL Subframe 0 ~ 9 →|

RAR message of UE1

Fig. 9

Fig.10

Fig. 11

$$N_{preamble}^{CIL0}\ \text{Preamble Format 0}$$

Fig. 12

Fig. 13

**EP 3 051 913 A1**

# INTERNATIONAL SEARCH REPORT

| International application No. |
|---|
| **PCT/CN2014/077916** |

**A. CLASSIFICATION OF SUBJECT MATTER**

H04W 74/08 (2009.01) i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, CNABS, CNKI, VEN: position, main information block, PDSCH, UE, cover, base station, repeat, downlink, system information block, terminal, message, M2M, sequence, cover enhancement level, random access, SIB, information, MAC, PDU, type, divide, classification, MTC, machine type communication, MTC, machine to machine, random access response, RAR, BS, node, enb

**C. DOCUMENTS CONSIDERED TO BE RELEVANT**

| Category* | Citation of document, with indication, where appropriate, of the relevant passages | Relevant to claim No. |
|---|---|---|
| X | CN 102870486 A (LG ELECTRONICS INC.), 09 January 2013 (09.01.2013), description, paragraphs [0002], [0061]-[0073], and [0102]-[0104]; and figures 4, 5 and 9 | 1-55 |
| A | CN 102447546 A (CHINA ACADEMY OF TELECOMMUNICATION TECHNOLOGY), 09 May 2012 (09.05.2012), the whole document | 1-55 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 July 2014 (23.07.2014) | **05 August 2014 (05.08.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **BO, Mei** Telephone No.: (86-10) **62089366** |

Form PCT/ISA/210 (second sheet) (July 2009)

## INTERNATIONAL SEARCH REPORT
### Information on patent family members

| International application No. |
| --- |
| **PCT/CN2014/077916** |

| Patent Documents referred in the Report | Publication Date | Patent Family | Publication Date |
| --- | --- | --- | --- |
| CN 102870486 A | 09.01.2013 | WO 2011139043 A3 | 01.03.2012 |
| | | WO 2011139043 A2 | 10.11.2011 |
| | | US 2013058301 A1 | 07.03.2013 |
| | | KR 20130016315 A | 14.02.2013 |
| CN 102447546 A | 09.05.2012 | US 2013294363 A1 | 07.11.2013 |
| | | WO 2012041203 A1 | 05.04.2012 |
| | | EP 2645758 A1 | 02.10.2013 |

Form PCT/ISA/210 (patent family annex) (July 2009)